# EUROPEAN PATENT SPECIFICATION

(11) **EP 2 711 277 B1**
(45) Date of publication and mention of the grant of the patent: **07.01.2015**
(21) Application number: 13181212.5
(22) Date of filing: 21.08.2013
(51) Int. Cl.: B62K 11/02

(54) **Frame structure for saddle-riding type automotive vehicle**
Rahmenstruktur für Sattel-Kraftfahrzeug
Structure de cadre de véhicule de type à enfourcher

(30) Priority: 20.09.2012 JP 2012206870
(43) Date of publication of application: 26.03.2014
(73) Proprietor: KAWASAKI JUKOGYO KABUSHIKI KAISHA, Kobe shi, Hyogo 650-8670 (JP)
(72) Inventor: Hayashi, Shiken, Akashi-shi, Hyogo 673-8666 (JP)
(74) Representative: Gassner, Wolfgang

(56) References cited:
- WO-A2-99/56997
- GB-A- 2 084 525
- JP-A- 2007 076 566
- US-A- 4 487 285
- US-A1- 2011 073 398

## Description

### BACKGROUND OF THE INVENTION

### (Field of the Invention)

The present invention relates to a saddle-riding type automotive vehicle, which includes a main frame for supporting a combustion engine and a pair of left and right subframes removably fitted to the main frame.

### (Description of Related Art)

In a saddle-riding type automotive vehicle such as, for example, a motorcycle, the structure has been made available, in which a subframe for reinforcing a main frame supporting a vehicle combustion engine is fitted laterally of the main frame. This is disclosed in, for example, the JP Laid-open Patent Publication No. 2007-076566. The subframe referred to above is not only used to reinforce the main frame, but is also formed with a mounting area for the installation of the combustion engine, and is generally removably connected with the main frame by means of bolts. Connection of the subframe with the main frame by the use of the bolts brings about some advantages that as compared with the welding of the subframe to the main frame, the frame rigidity would not become excessive and the balance of rigidity would be enhanced, allowing the shape or the like of the subframe to be chosen freely.

It has, however, been found that the subframe itself, which is removably supported at its opposite ends with the main frame, is low in rigidity and an intermediate portion thereof is particularly susceptible to deformation. If the rigidity of the subframe itself is increased by way of, for example, increasing the wall thickness of such subframe, the feeling during the travel may be possibly lowered and such reduction in feeling is not preferable.

### SUMMARY OF THE INVENTION

In view of the foregoing problems and inconveniences, the present invention is intended to provide a frame structure for a saddle-riding type automotive vehicle capable of increasing the support rigidity of the combustion engine without the feeling being lowered during the traveling.

In order to accomplish the foregoing object the present invention provides a saddle-riding type automotive vehicle having a frame structure which includes a main frame assembly to support a combustion engine and a pair of left and right subframes removably fitted to the main frame assembly. In this frame structure, each of the left and right subframes has anteroposterior end portions supported by the main frame assembly, respective intermediate portions of the left and right subframes are connected together by means of a reinforcement member. Also, the left and right paired subframes support the combustion engine in one side of anteroposterior directions of the cylinder block of the combustion engine and are connected together by means of the reinforcement member in the other side of the anteroposterior directions of the cylinder block.

According to the above described feature, since the left and right paired subframes are removably fitted to the main frame assembly, as compared with the case in which the subframes are welded to the main frame assembly, the frame rigidity will not become excessive and the rigidity balance will become good. In addition, the shape or the like of the subframes can be selected freely and the degree of freedom of designing increases. Also, since the intermediate portions of the subframes remote from the to-be-supported portions on the engine side are reinforced by the reinforcement member, the support rigidity of the motorcycle body frame can be increased effectively. Additionally, since it is sufficient to merely connect the reinforcement member with the subframes, the rigidity of the subframes themselves are not undesirably increased, and therefore, the feeling during the travel will not be lowered. Yet, since the left and right paired subframes support the combustion engine in one side of the anteroposterior direction of the cylinder block of the combustion engine, the use of a down tube necessary to support the front portion of the combustion engine can be dispensed with.

In a preferred embodiment of the present invention, the reinforcement member is preferably disposed above an exhaust pipe in front of the combustion engine, in which case the left and right paired subframes extend on a laterally outer side of the combustion engine. According to this feature, since each of the subframes is positioned laterally outside of the combustion engine, no interference with the combustion occurs. As a result, removal and fitting of the subframe relative to the main frame assembly is eased. Also, since the reinforcement member is positioned above the exhaust pipe, no interference with the exhaust pipe occurs. Accordingly, the removal and fitting of the reinforcement member relative to the subframes is eased, and also, the degree of freedom of arrangement of the exhaust pipe is increased.

In another preferred embodiment of the present invention, where each of the subframes includes a first subframe piece, which is connected at one end portion thereof with the main frame assembly, and a second subframe piece connected at one end portion thereof with the other end portion of the first subframe piece and at the other end portion thereof with a rear portion of the main frame assembly, the left and right paired subframes are preferably connected together by means of the reinforcement member at a location in the vicinity of a point of connection between the first subframe piece and the second subframe piece. According to this feature, since the subframe is divided into the two subframe pieces, the manufacture can be eased even though it is a large subframe, and also the point of connection, which is susceptible to deformation, can be effectively reinforced.

In a further preferred embodiment of the present invention, the frame structure for the saddle-riding type automotive vehicle may further include a side cowl to cover a front area of the combustion engine from lateral side, in which case the reinforcement member has a side cowl support portion to support the side cowl. According to this feature, there is no need to use any extra bracket for the support of the side cowl on the vehicle body frame and, therefore, the number of component part decreases.

In a yet preferred embodiment of the present invention, where the side cowl is provided, the side cowl is preferably supported by a bolt that is inserted into the side cowl support portion from an anteroposterior direction. According to this feature, the bolt is invisible from the outer side and, hence, the appearance of the vehicle improves.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a side view showing a motorcycle equipped with a frame structure designed in accordance with a preferred embodiment of the present invention;
Fig. 2 is a side view showing, on an enlarged scale, a motorcycle combustion engine and a front portion of a motorcycle frame assembly employed in the motorcycle shown in Fig. 1;
Fig. 3 is a front elevational view showing the motorcycle combustion engine and the front portion of the motorcycle frame assembly;
Fig. 4 is a front elevational view showing a reinforcement member for the motorcycle frame assembly;
Fig. 5 is a top plan view of the reinforcement member shown in Fig. 4;
Fig. 6 is a rear view showing, on a further enlarged scale, a left mounting plate employed in the reinforcement member;
Fig. 7 is a right side view showing a right mounting plate employed in the reinforcement member;
Fig. 8 is a perspective view showing a connection between the reinforcement member and a right side cowl, which is viewed from outside in a forward slantwise direction;
Fig. 9 is a perspective view showing the connection as viewed from rear in an upward slantwise direction; and
Fig. 10 is a perspective view showing the connection as viewed from inside in a forward slantwise direction.

### DESCRIPTION OF PREFERRED EMBODIMENTS

Hereinafter, a preferred embodiment of the present invention will be described in detail with particular reference to the accompanying drawings. Before the description of the present invention proceeds, it is to be noted that the terms "left" and "right" are used to denote opposite positions or directions, respectively, relative to a motorcycle rider or motorist then occupying a motorcycle rider's seat and looking forwards in a direction parallel to the longitudinal sense of the motorcycle. Further, the term "motorcycle body" is used to denote a mechanical framework of the motorcycle, including a motorcycle frame structure and an engine.

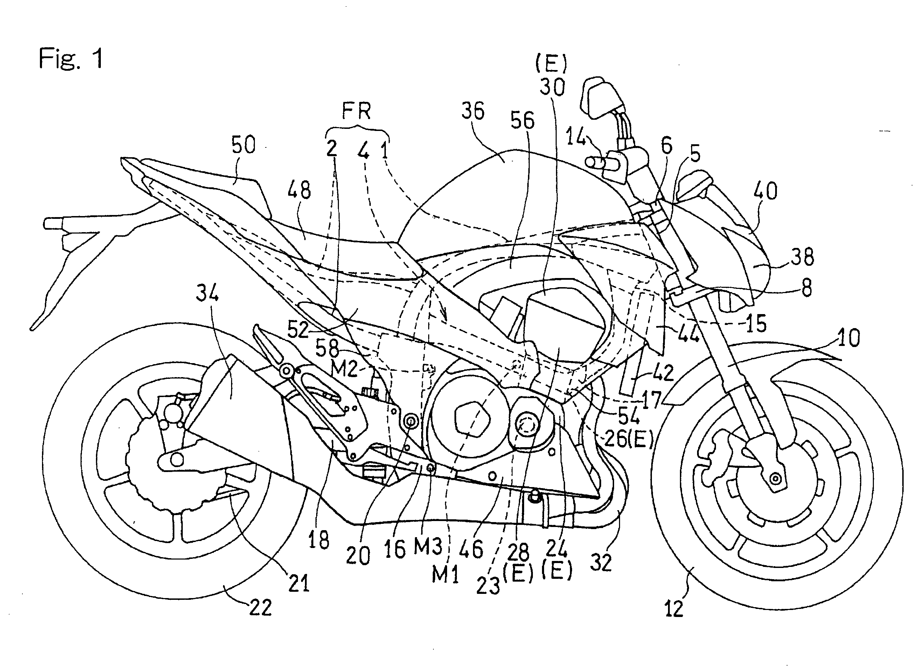

Fig. 1 is a right side view showing a motorcycle, which is one kind of saddle-riding type automotive vehicles and which is equipped with a frame structure designed in accordance with the preferred embodiment of the present invention. A motorcycle frame structure FR shown therein includes a main frame assembly 1 forming a front half thereof, a rear frame assembly 2 connected with a rear portion of the main frame assembly 1 and forming a rear half thereof, and a pair of left and right subframes 4 (4L and 4R) extending from a front portion of the main frame assembly 1 to a rear portion thereof. The motorcycle frame structure FR is not provided with any down tube.

A head tube 5 is fitted to the main frame assembly 1, and an upper bracket 6 and a lower bracket 8 are supported by the main frame assembly 1 through a steering shaft (not shown) that is rotatably inserted into the head tube 5. A front fork assembly 10 is supported by the upper and lower brackets 6 and 8 with a front wheel 12 rotatably supported at a lower end portion of the front fork assembly 10. The upper bracket 6 at an upper end portion of the front fork assembly 10 has a steering handlebar 14 mounted thereon for angular movement together with the front fork assembly 10.

A rear end portion of the main frame assembly 1 is inclined rearwardly slantwise, and a swingarm bracket 16 is formed at this rear end portion of the main frame assembly 1. A swingarm 18 is pivotally supported by the swingarm bracket 16 through a pivot shaft 20, and a rear wheel 22 is rotatably supported by a rear end portion of this swingarm 18. A motorcycle combustion engine E, which is a drive source for the motorcycle, is mounted on a substantially intermediate portion of the main frame assembly 1 with respect to the longitudinal sense of the motorcycle, in a fashion tilted forwardly. The rear wheel 22 referred to above is driven by the combustion engine E through a transmission member 21 such as, for example, a substantially endless chain. The combustion engine E referred to above is supported by the motorcycle frame structure FR at three, first to third engine mounting areas M1, M2 and M3.

Each of the left and right subframes 4 is so formed as to represent a generally L-shaped configuration when viewed from lateral side. More specifically, each of the subframes 4 includes a first subframe piece 15, extending downwardly from a front portion of the main frame assembly 1, and a second subframe piece 17 extending rearwardly from a lower end portion of the first subframe piece 15. Specifically, the second subframe piece 17 has a front end portion connected with the first subframe piece 15 so as to extend from front to rear of the combustion engine E over a crankcase 24 at an outer side of a cylinder block 26 and is then connected with a rear portion of the main frame assembly 1. The respective subframe 4 reinforces the main frame assembly 1.

Both of the first and second subframe pieces 15 and 17 referred to above are formed by casting. Specifically, the second subframe piece 17 is longer than the first subframe piece 15, and a longitudinal intermediate portion of the second subframe piece 17 is provided with the first engine mounting area M1 referred to above. A rear portion of the cylinder block 26 of the combustion engine E is fitted to this first engine mounting area M1. The second engine mounting area M2 is provided at a top portion of the swingarm bracket 16, and a rear upper portion of the combustion engine E is fitted to such second engine mounting area M2. On the other hand, the third engine mounting area M3 is provided in a lower portion of the swingarm bracket 16, and a rear lower portion of the combustion engine E is fitted to such third engine mounting area M3.

Each of the engine mounting areas M1 to M3 is formed with an insertion hole (not shown). When corresponding bolts (not shown) are inserted into the respective insertion holes in the engine mounting areas M1 to M3 and are subsequently fastened into associated threaded holes (not shown) provided in the combustion engine E, the combustion engine E comes to be supported by the motorcycle frame structure FR. At the second engine mounting area M2, the combustion engine E is fixed to the motorcycle frame structure FR by a rubber mount through an elastic member such as, for example, rubber. At the first and third engine mounting areas M1 and M3, the combustion engine E is supported by the motorcycle frame structure FR by respective rigid mounts with no elastic member intervening.

The motorcycle combustion engine E referred to above is an internal combustion engine and, in the practice of this preferred embodiment, is a parallel multi-cylinder, water cooled internal combustion engine such as, for example, a four-cylinder, four-stroke water-cooled internal combustion engine. The combustion engine E includes the crankcase 24 to support a crank shaft 23, the cylinder block 26 protruding upwardly from the crankcase 24, a cylinder head 28 mounted atop the cylinder block 26, and a head cover 30 enclosing the cylinder head 28. Four exhaust pipes 32 communicated respectively with cylinders defined in the cylinder block 26 are connected with a front surface of the cylinder head 28, and those exhaust pipes 32 are, after having been markedly curved forwards and then extended in a rearward direction, merged below the combustion engine E and are fluid connected with a muffler 34 disposed on a right side of the rear wheel 22.

A fuel tank 36 is disposed atop the main frame assembly 1. A headlamp unit 38 is supported by a front surface of the front form assembly 10. A front cowl 40, made of a resinous material, is supported by the headlamp unit 38 so as to cover an upper front area of the front fork assembly 10.

A radiator 42 for dissipating an engine coolant medium is disposed forwardly above the combustion engine E in a fashion tilted forwards. A pair of left and right side cowls 44 are mounted so as to extend from laterally upwardly of the radiator 42 towards respective upper end portions of the left and right subframe 4 and laterally outwardly of the front portion of the main frame assembly 1 and are supported by the motorcycle frame structure FR. A pair of left and right lower cowls 46, each made of a resinous material, are supported beneath the crankcase 24 of the combustion engine E so as to enclose a lower portion of the combustion engine E from laterally outwardly.

A seat assembly comprised of a rider's seat 48 and a fellow passenger's seat 50 is mounted on an upper portion of the rear frame assembly 2. Side coverings 52 extend from below the rider's seat 48 to a rear portion of the cylinder block 26 of the combustion engine E so as to permit each of those side coverings 52 to enclose the associated second subframe piece 17 from outside. Subframe coverings 54, one on each side of the motorcycle, are supported by the respective subframes 4 so as to extend from front end portions of the associated side coverings 52 to corresponding lower portions of the side cowls 44 to thereby cover the first frame pieces 15 from lateral outside.

On each side of the motorcycle, an upper frame covering 56 and a lower frame covering 58 are disposed at upper and lower positions, respectively, with the side covering 52 intervening therebetween. The upper frame covering 56 referred to above extends from the corresponding side cowl 44 to the aide covering 52 along a lower edge of the fuel tank 36 so as to cover the main frame assembly 1 from lateral outside. On the other hand, the lower frame covering 58 referred to above extends downwardly from the corresponding side covering 52 so as to cover the swingarm bracket 16 from lateral outside.

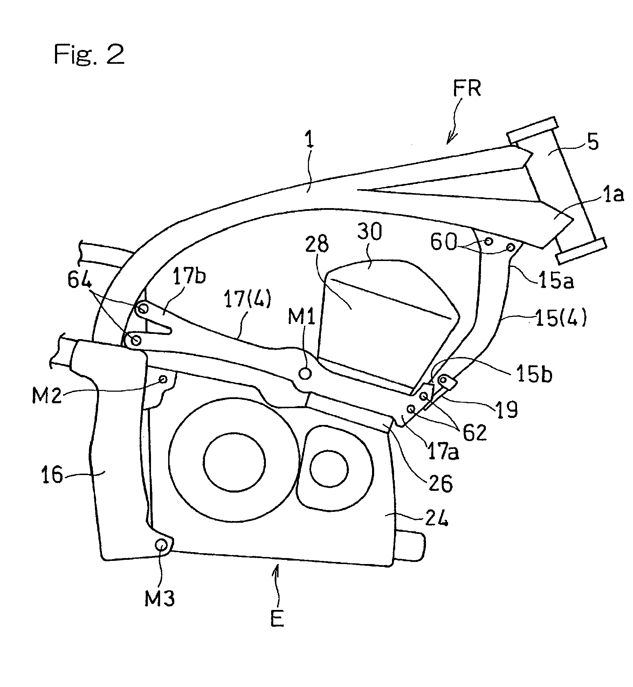

The main frame assembly 1 and the first and second subframe pieces 15 and 17 are foundry pieces made of steel. As shown in Fig. 2, the first subframe piece 15 has an upper end portion 15a connected with a front end portion 1a of the main frame assembly 1. The second subframe piece 17 extends rearwardly from a lower end portion 15b of the first subframe piece 15 and then to a rear portion 1b of the main frame assembly 1.

The upper end portion 15a of the first subframe piece 15 is overlapped with an inner side face of the front end portion 1a of the main frame assembly 1 and is then connected therewith by means of bolts 60 inserted laterally from outside of the motorcycle body. Also, a front end portion 17a of the second subframe piece 17 is overlapped with an outer side face of the lower end portion 15b of the first subframe piece 15 and is connected therewith by means of bolts 62 inserted laterally from outside of the motorcycle body. Further, a rear end portion of the second subframe piece 17 is overlapped with an outer side face of the rear portion 1b of the main frame assembly 1 and is connected therewith by means of bolts 64 inserted laterally from outside of the motorcycle body. In this way, the left and right subframes 4 are removably fixed to the main frame assembly 1. In other words, the upper end portion 15a of the first subframe piece 15 and the rear end portion 17b of the second subframe piece 17 define respective to-be-supported portions through which the subframes 4 are connected with the main frame assembly 1.

Connection between the front end portion 1a of the main frame assembly 1 and the upper end portion 15a of the first subframe piece 15 is accomplished by inserting the bolts 60, each having a male thread formed at a tip end portion thereof, into corresponding bolt insertion holes (not shown), defined in the first subframe piece 15, and then threading those bolts 60 into respective threaded holes (not shown) defined in the main frame assembly 1.

Connection between the lower end portion 15b of the first subframe piece 15 and the front end portion 17a of the second subframe piece 17 is accomplished by inserting the bolts 62 into corresponding bolt insertion holes (not shown), defined in the second subframe piece 17, and then threading those bolts 62 into respective threaded holes (not shown) defined in the first subframe piece 15.

Connection between the rear end portion 1b of the main frame assembly 1 and the rear end portion 17b of the second subframe piece 17 is accomplished by inserting the bolts 64 into corresponding bolt insertion holes (not shown), defined in the second subframe piece 17, and then threading those bolts 64 into respective threaded holes (not shown) defined in the main frame assembly 1.

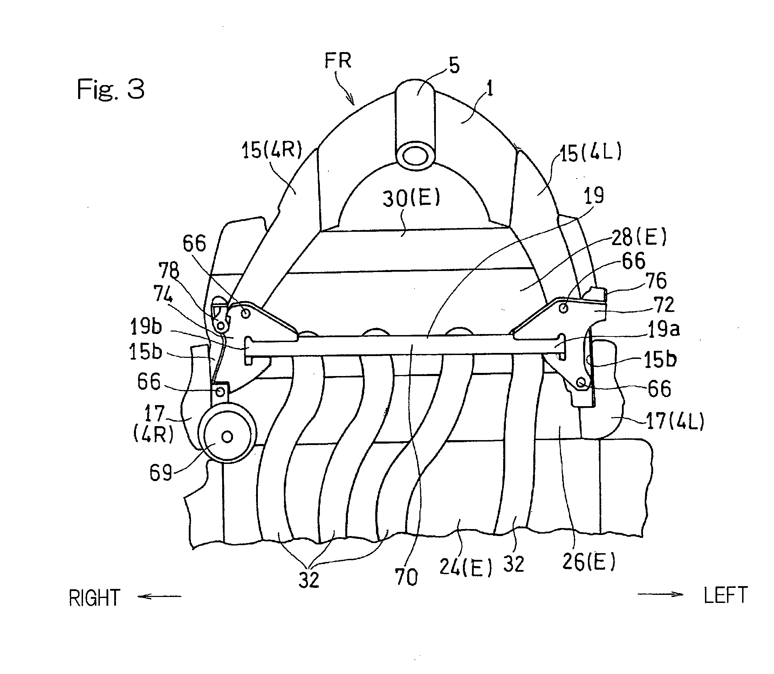

As shown in Fig. 3, the left and right first subframe pieces 15 and 15 are connected together by means of a reinforcement member 19 extending in a widthwise direction of the motorcycle. In other words, as best shown in Fig. 2, respective intermediate portions of the left and right subframes 4 each representing a generally L-shaped configuration are connected together by means of the reinforcement member 19. Point of connection of the reinforcement member 19 lies above the point of connection between the first subframe pieces 15 and the second subframe pieces 17. The second subframe pieces 17 are such that the reinforcement member 19 and the first engine mounting area M1 lie side by side relation on longitudinal opposite sides with the cylinder block 26 positioned therebetween. No engine mounting area is formed forwardly of the cylinder block 26.

In other words, the second subframe piece 17 has the front end portion 17a connected with the reinforcement member 19 through the first subframe piece 15, also has an intermediate portion connected with the combustion engine E and further has the rear end portion 17b connected with the main frame assembly 1. With the respective intermediate portions of the left and right second subframe pieces 17 and 17 connected with the engine mounting area M1, it is possible to allow the engine mounting area M1 to have a function of reinforcing the subframes 4. Accordingly, at the front end portion, the intermediate portion and the rear end portion, the rigidity of the second subframe piece 17 is increased. The first subframe piece 15 has the upper end portion 15a connected with the main frame assembly 1 and also has the lower end portion 15b connected with the reinforcement member 19 and, accordingly, the rigidity of the first subframe piece 15 is increased.

As described above, by means of the engine mounting area M1 and the reinforcement member 19, it is possible to increase the rigidity of the motorcycle frame structure FR as a whole without increasing the rigidity of the subframes 4 themselves by means of increasing the wall thickness of the subframes 4. As a result, without lowering the feeling during traveling, lightening or weight saving of the motorcycle frame structure FR can be accomplished.

Also, the reinforcement member 19 shown in Fig. 3 is connected by means of bolts 66, which are inserted from front of the motorcycle body, with its left and right end portions 19a and 19b overlapped with front faces of the left and right first subframe pieces 15 and 15. Accordingly, removal and fitting of the reinforcement member 19 can be eased. In the embodiment now under discussion, the reinforcement member 19 and a horn (klaxon) 69 are concurrently jointed to the left first subframe 15 by means of the bolts 66. Accordingly, there is no need to use any extra bracket for supporting the horn, and the number of component parts is thus reduced.

The left and right first subframe pieces 15 and 15 extend downwardly from the main frame assembly 1 so as to flare outwardly in a direction widthwise of the motorcycle body. The first subframe pieces 15 and 15 have respective lower end portions 15b and 15b connected together by means of the reinforcement member 19. More specifically, the left and right subframes 4L and 4R are connected together by means of the reinforcement member 19 at respective points in the vicinity of points of connection of the first subframe 15 with the second subframe piece 17. In other words, the left and right first subframe pieces 15 and 15, the reinforcement member 19 and the main frame assembly 1 altogether depicts a generally or substantially triangular shape when viewed from front. With the reinforcement member 19 fitted in the vicinity of the points of fastening connection between the respective subframe pieces 15 and 15, a portion in the points of connection, which is susceptible to deformation, can be reinforced effectively. Also, the reinforcement member 19 is disposed above and forwardly of exhaust pipes 32 fitted to the front surface of the cylinder head 28.

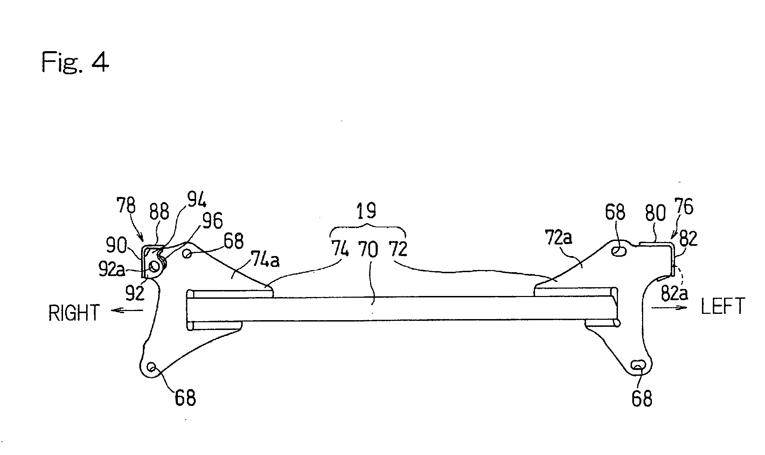

As shown in Fig. 4, the reinforcement member 19 includes a reinforcement member main body 70 in the form of a tubular pipe of a steel material, which extends leftwards and rightwards, and left and right mounting plates 72 and 74 in the form of metal plates that are fitted to left and right, opposite end portions 70a and 70b of the reinforcement member main body 70. The reinforcement member main body 70 and the left and right mounting plates 72 and 74 are connected together by means of welding.

Each of the left and right mounting plates 72 and 74, when viewed from front, represents a substantially or generally triangular shape with its apex positioned inwardly of the motorcycle body. In the vicinity of the remaining two apexes of this triangular shape, two first bolt insertion holes 68, positioned one above the other in each of the left and right mounting plates 72 and 74, are formed so as to receive the respective bolts 66 (shown in Fig. 3). The first subframe 15 and the reinforcement member 19 as shown in Fig. 3 are connected with each other in the following manner. At the outset, the left and right mounting plates 72 and 74 are overlapped with respective front faces of the left and right first subframe pieces 15 and 15; the bolts 66, each having a tip end portion formed with a male thread, are subsequently inserted into the first bolt insertion holes 68 (shown in Fig. 4); followed by fastening those bolts 66 into respective threaded holes (not shown) formed in the first subframe piece 15.

The front face of the first subframe piece 15 is formed flat so that the mounting plates 72 and 74 can contact. Since the reinforcement member 19 and the subframe pieces 15 and 15 are connected together at two locations by means of the two bolts 66 for each, this connection is accomplished stably.

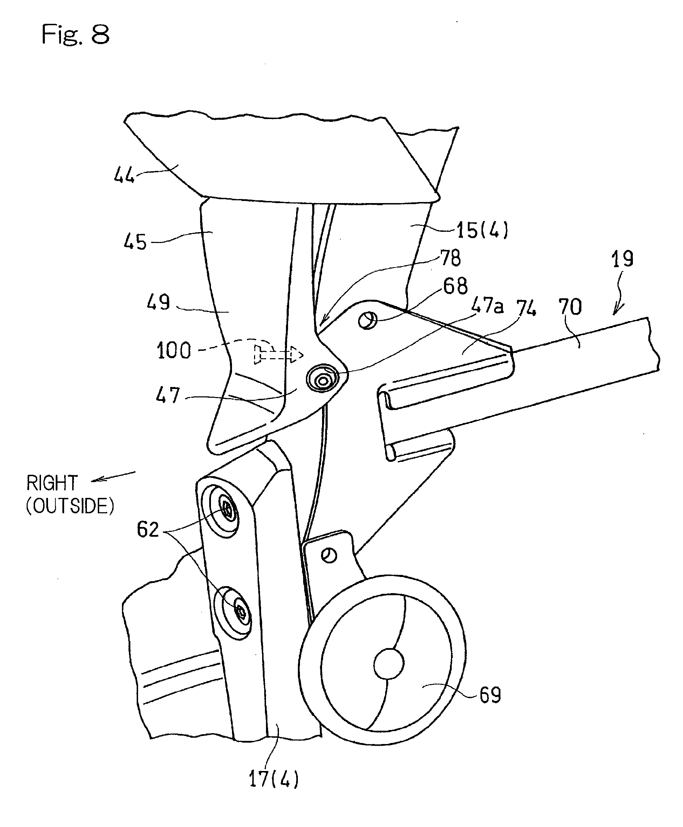

As shown in Fig. 8, the first bolt insertion holes 68 are provided at respective positions displaced upwards and downwards of the bolts 62 each used to connect the first subframe piece 15 with the second subframe piece 17. Accordingly, it is possible to avoid an undesirable interference between the bolts 62 and the bolts 66.

The first bolt insertion holes 68 in the left mounting plate 72 best shown in Fig. 4 are each formed in the form of an elongated hole or a slot having a lengthwise direction in a leftward and rightward direction. It is for the purpose of accommodating errors in molding and mounting, for example, of the subframe 4 and the reinforcement member 19. Also, since the left and right mounting plates 72 and 74 that are connected with the subframe 4 are formed in the form of metal plates, the errors in molding and mounting can be accommodated as the metal plate deform.

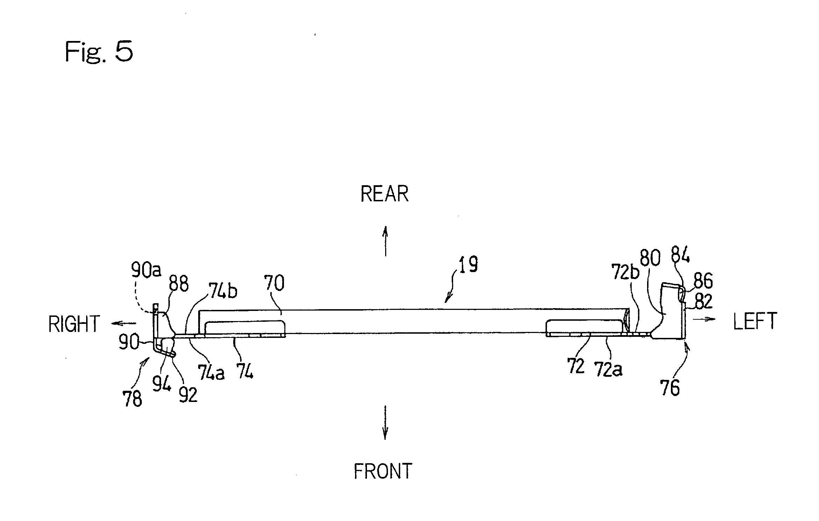

As shown in Fig. 5, the reinforcement member main body 70 is disposed on one side adjacent rear faces 72b and 74b that are opposite to respective front faces 72a and 74a exposed in a direction rearwardly of the left and right mounting plates 72 and 74, that is, forwardly of the motorcycle body. In other words, as best shown in Fig. 3, the reinforcement member main body 70 is positioned intermediate between the left and right subframes 4L and 4R. Also, the reinforcement member main body 70 is, as best shown in Fig. 2, disposed rearwardly of the front face of the subframe 4 and concealed by the subframe 4 when viewed from lateral side. Accordingly, the reinforcement member main body 70 can be accommodated inwardly of the motorcycle body by the subframes 4L and 4R and, hence, the space saving can be attained, but also the sensation to beauty is enhanced.

Each of the left and right mounting plates 72 and 74 as shown in Fig. 5 has a left or right side cowl support portion 76 or 78 for supporting a lower portion of the corresponding side cowl 44 (best shown in Fig. 1). Each of the left and right side cowl support portions 76 and 78 is connected with an upper portion of an outer side portion of the corresponding left or right mounting plate 72 or 74 by means of welding. Each of the left and right side cowl support portions 76 and 78 is formed by bending a metal plate and is connected with the corresponding left or right mounting plate 72 or 74 by means of welding. Also, although not encompassed within the scope of this embodiment, a bracket for supporting a component disposed forwardly of the motorcycle body, for example, the radiator 42 (best shown in Fig. 1) may be fitted to the reinforcement member main body 70 of the reinforcement member 19.

The left side cowl support portion 76 includes a first upper wall 80, which is connected with an upper edge of the left mounting plate 72 so as to extend rearwardly, and a first side wall 82 which is connected with an outer side edge of the left mounting plate 72 so as to extend rearwardly. The first upper wall 80 and the first side wall 82 are formed by bending a single metal plate.

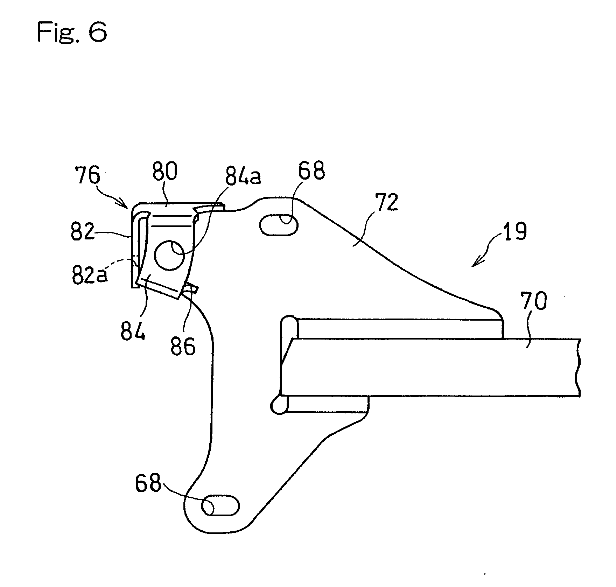

As shown in Fig. 6, the first upper wall 80 has a rear end bend downwardly to form a first rear wall 84 that extends downwardly from the first upper wall 80. The first rear wall 84 so formed has a lower end bent forwards to form a first lower wall 86 that extends forwards from the first rear wall 84. The first lower wall 86 is connected at its front end with a rear face 72b of the left mounting plate 72 by mean of welding. The first side wall 82 is formed with a first throughhole 82 defined therein so as to extend in a leftward and rightward direction and the first rear wall 84 is formed with a second throughhole 84a so as to extend in a forward and rearward direction, i.e., an anteroposterior direction.

The right side cowl support portion 78 best shown in Fig. 5 includes a second upper wall 88, which is connected with an upper edge of the right mounting plate 74 so as to extend rearwards, and a second side wall 90 connected with an outer side edge of the right mounting plate 74 so as to extend in the anteroposterior direction. The second upper wall 88 and the second side wall 90 are formed by bending a single metal plate.

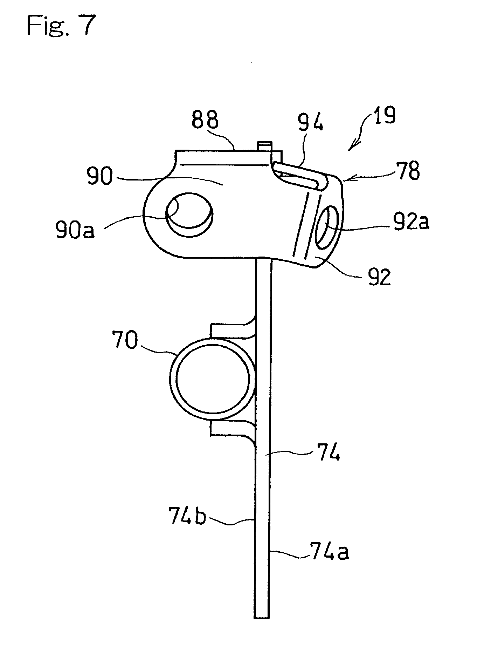

The second side wall 90 has a front end bent inwardly (leftwards) of the motorcycle body to form a second front wall 92 that extends from the second side wall 90 in a direction inwardly forwardly of the motorcycle body. A bent piece 94 is provided in an upper face of the second front wall 92 so as to be oriented rearwardly, and a rear end of the bent piece 94 is connected with a front face 72a of the right mounting plate 72 by means of welding. As shown in Fig. 7, the second side wall 90 is provided with a third throughhole 90a oriented in a leftward and rightward direction and the second front wall 92 is formed with a fourth throughhole 92a so as to be oriented in the anteroposterior direction. At a position of the right mounting plate 74 which confronts the fourth throughhole 92a, a fifth throughhole 96 oriented in the anteroposterior direction is formed.

Hereinafter, the connecting structure between a lower portion of the side cowls 44 and the cowl support portions 76 and 78 will be described with particular reference to Figs. 8 to 10, noting that for the sake of clarity only reference will be made to the right side cowl support portion 78. As shown in Fig. 8, the side cowl 44 has a lower portion formed integrally with a to-be-fitted portion 45 that extends downwardly. This to-be-fitted portion 45 includes a to-be-fitted portion front wall 47, which is oriented forwards, and a to-be-fitted portion outer side wall 49 which is oriented laterally outwards. The to-be-fitted portion front wall 47 is formed with a fastening member insertion hole 47a, which is oriented in the anteroposterior direction, and a projection 100 protruding inwardly of the motorcycle body is formed inside the to-be-fitted portion outer side wall 49.

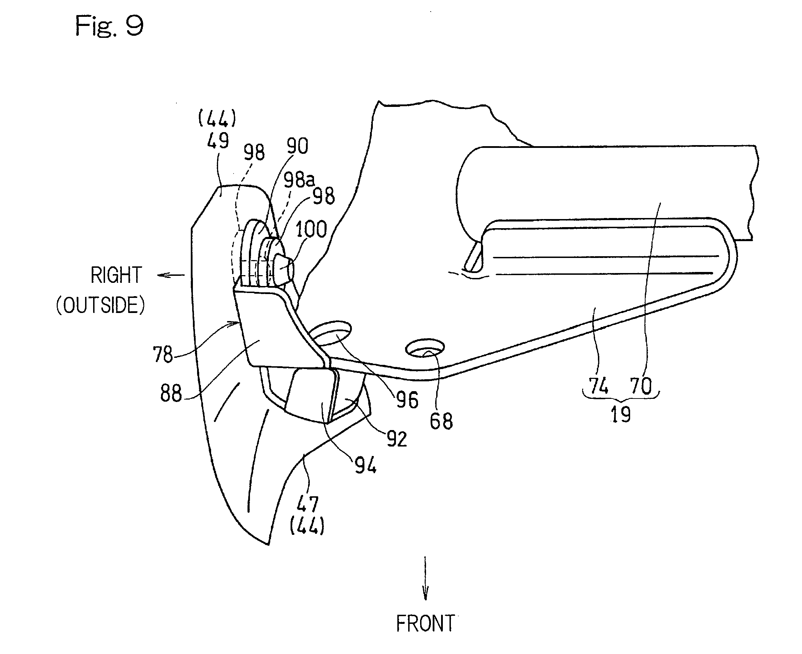

As shown in Fig. 9, a tubular elastic element 98 such as, for example, grommet is engaged in the third throughhole 90a of the right side cowl support portion 78. The projection 100 provided inside the to-be-fitted portion outer side wall 49 of the side cowl 44 is inserted into the inside of the tubular elastic element 98 from lateral outside of the motorcycle body. By so doing, the lower portion of the side cowl 44 is engaged in the right side cowl support portion 78.

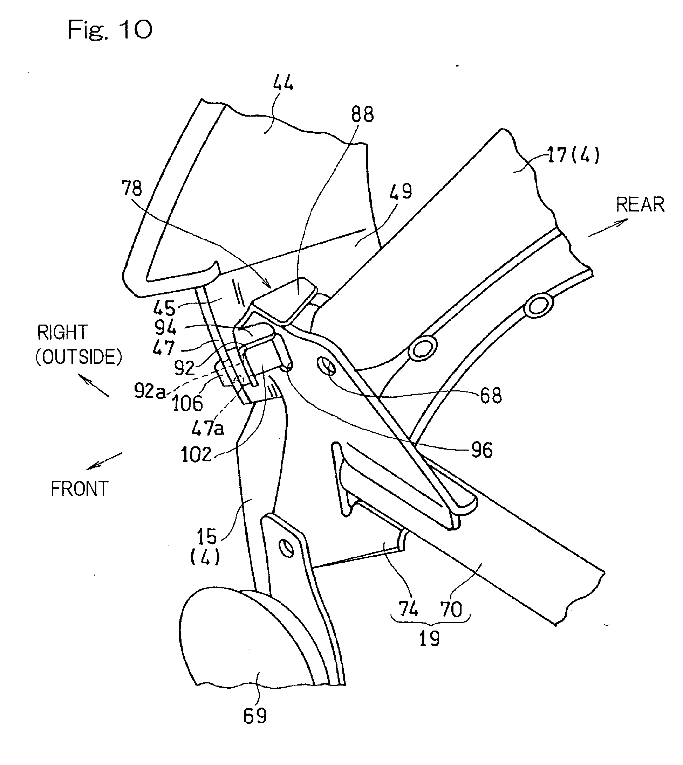

As shown in Fig. 10, a rubber nut 102 is engaged in the fourth throughhole 92a of the right side cowl support portion 78. A fastening member insertion throughhole 47a is provided in the to-be-fitted portion front wall 47 of the side cowl 44. A fastening member 106 such as, for example, a bolt is inserted from front into the fastening member insertion hole 47a and is firmly fastened to a threaded portion (not shown) of the rubber nut 102. By so doing, the lower portion of the side cowl 44 is fixed to the side cowl support portion 78. At this time, a tip end of the fastening member 106 extends through the fifth throughhole 96. When supported at two locations in this way, the support rigidity is increased, and also a bolted connection can be performed while positioned at an engagement portion and, therefore, the workability increases.

Although the left side cowl support portion 76 is of a structure similar to that described above, the left side cowl support portion 76 is different from the right side cowl support portion 78 in that the fastening member 106 shown in and described with reference to Fig. 10 is inserted from rear. This is because in the embodiment now under discussion, a hose for a water pump for an engine cooling water is disposed forwardly of the left side cowl support portion 76. Where a space is available forwardly of the side cowl support portion 76, the fastening member 106 can be inserted from front in a manner similar to that in the right side cowl support portion 78.

In the construction described hereinabove, as shown in Fig. 2, the left and right subframes 4L and 4R are removably fitted to the main frame assembly 1. Accordingly, as compared with the case in which the subframe 4 is welded to the main frame assembly 1, the frame rigidity will not become excessive and the rigidity balance will become good. In addition, the shape or the like of the subframe 4 can be selected freely and the degree of freedom of design can be increased. Also, since the intermediate portion of the subframe 4 on the combustion engine E side, which is remote from the to-be-supported portions 15a and 17a, is reinforced by the reinforcement member 19, the support rigidity of the motorcycle frame structure FR can be increased effectively.

Also, since the reinforcement member 19 is only connected with the subframe 4, the rigidity of the subframe 4 itself will not be undesirably increased and the feeling during traveling will not be lowered. Yet, since the left and right subframes 4L and 4R support the combustion engine E at the rear of the cylinder block 26 of the combustion engine E, the use of any down tube for supporting the front portion of the combustion engine E can be dispensed with.

As shown in Fig. 3, since the subframes 4L and 4R are positioned laterally outside of the combustion engine E, no interference with the combustion engine E occurs. As a result, removal and fitting of the subframes 4L and 4R relative to the main frame assembly 1 are facilitated. Yet, since the reinforcement member 19 is positioned above the exhaust pipes 32, interference with the exhaust pipes 32 will not occur. As a result, removal and fitting of the subframes 4L and 4R relative to the main frame assembly 1 are facilitated, and also the degree of freedom of arrangement of the exhaust pipes 32 increases.

Since the subframe 4 is divided into the two subframe pieces 15 and 17, the manufacture is easy even with a large subframe 4. In addition, the vicinity of connection of the subframe pieces 15 and 17 is connected by the reinforcement member 19 and, therefore, the point of connection, which is susceptible to deformation, can be effectively reinforced.

As shown in Fig. 4, the reinforcement member 19 includes the side cowl support portions 76 and 78 for supporting the side cowls 44, there is no need to provide the motorcycle frame structure FR with any bracket for the support of the side cowls and, therefore, the number of component parts decreases.

As shown in Fig. 10, since the side cowl 44 is supported by the fastening member 106 that is inserted from front of the side cowl support 78, the fastening member 106 is invisible from the outer side surface and, hence, the appearance of the motorcycle body increase.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. By way of example, although in describing the foregoing embodiment reference has been made to the motorcycle, the present invention equally applies to any saddle-riding type automotive vehicle other than the motorcycle, for example, a tricycle or a four-wheeled buggy.

Also, in describing the foregoing embodiment, the left and right first subframe pieces 15 and 15 have been shown and described as connected together by means of the reinforcement member 19, but the left and right second subframe pieces 17 and 17 may be connected together by means of the reinforcement member 19.

In addition, the frame structure according to the present invention may work satisfactorily if it is of a structure in which the left and right subframes 4L and 4R are connected on both sides of the anteroposterior direction with the cylinder block 26 intervening therebetween, and the engine mounting area M1 may be provided forwardly of the cylinder block 26 and the left and right subframes 4L and 4R may be connected with each other by means of the reinforcement member 19 at a location rearwardly of the cylinder block 26.

Also, although in describing the foregoing embodiment, the subframe 4 has been shown and described as having a split structure comprised of the first and second subframe pieces 15 and 17, it may be of one-piece construction.

Accordingly, such changes and modifications are, unless they depart from the scope of the present invention as delivered from the claims annexed hereto, to be construed as included therein.

### [Reference Numerals]

- 1: Main frame assembly
- 4L, 4R: Subframe
- 15: First subframe piece
- 17: Second subframe piece
- 19: Reinforcement member
- 26: Cylinder block
- 32: Exhaust pipe
- 44: Side cowl
- 76, 78: Side cowl support portion
- 106: Fastening member (Bolt)
- E: Combustion engine

## Claims

1. A saddle-riding type automotive vehicle having a frame structure which comprises:
a main frame assembly (1) to support a combustion engine (E); and
a pair of left and right subframes (4) removably fitted to the main frame assembly (1), each of the left and right subframes (4) having anteroposterior end portions supported by the main frame assembly (1), respective intermediate portions of the left and right subframes (4) being connected together by means of a reinforcement member (19);
**characterized in that**
the left and right paired subframes (4) support the combustion engine (E) in one side of anteroposterior directions of the cylinder block (26) of the combustion engine (E) and are connected together by means of the reinforcement member (19) in the other side of the anteroposterior directions of the cylinder block (26).

2. The saddle-riding type automotive vehicle having a frame structure as claimed in claim 1, wherein the reinforcement member (19) is disposed above an exhaust pipe (32) in front of the combustion engine (E) and the left and right paired subframes (4) extend on a laterally outer side of the combustion engine (E).

3. The saddle-riding type automotive vehicle having a frame structure as claimed in claim 1 or 2, wherein
each of the subframes (4) comprises:
a first subframe piece (15), which is connected at one end portion thereof with the main frame assembly (1); and
a second subframe piece (17) connected at one end portion thereof with the other end portion of the first subframe piece (15) and at the other end portion thereof with a rear portion of the main frame assembly (1), and
the left and right paired subframes (4) are connected together by means of the reinforcement member (19) at a location in the vicinity of a point of connection between the first subframe piece (15) and the second subframe piece (17).

4. The saddle-riding type automotive vehicle having a frame structure as claimed in any one of claims 1 to 3, further comprising a side cowl (44) to cover a front area of the combustion engine (E) from lateral side; wherein
the reinforcement member (19) has a side cowl support portion (76, 78) to support the side cowl (44).

5. The saddle-riding type automotive vehicle having a frame structure as claimed in claim 4, wherein the side cowl (44) is supported by a bolt that is inserted into the side cowl support portion (76, 78) from an anteroposterior direction.

## Patentansprüche

1. Kraftfahrzeug mit Sattel mit einer Rahmenstruktur, welche umfasst:
eine Hauptrahmenbaugruppe (1) zum Stützen eines Verbrennungsmotors (E); und
ein Paar von linken und rechten Unterrahmen (4), welches an der Hauptrahmenbaugruppe (1) entfernbar eingebaut ist, wobei jeder der linken und rechten Unterrahmen (4) anteroposteriore Endabschnitte aufweist, welche durch die Hauptrahmenbaugruppe (1) gestützt werden, wobei jeweilige mittige Abschnitte der linken bzw. rechten Unterrahmen (4) mittels eines Verstärkungselements (19) miteinander verbunden sind;
**dadurch gekennzeichnet, dass**
die links und rechts gepaarten Unterrahmen (4) den Verbrennungsmotor (E) auf einer Seite von anteroposterioren Richtungen des Zylinderblocks (26) des Verbrennungsmotors (E) stützen und mittels des Verstärkungselements (19) auf der anderen Seite der anteroposterioren Richtungen des Zylinderblocks (26) miteinander verbunden sind.

2. Kraftfahrzeug mit Sattel mit einer Rahmenstruktur nach Anspruch 1, wobei das Verstärkungselement (19) oberhalb eines Abgasrohrs (32) vor dem Verbrennungsmotor (E) angeordnet ist, und sich die links und rechts gepaarten Unterrahmen (4) an einer lateralen Außenseite des Verbrennungsmotors (E) erstrecken.

3. Kraftfahrzeug mit Sattel mit einer Rahmenstruktur nach Anspruch 1 oder 2, wobei
jeder der Unterrahmen (4) umfasst:
ein erstes Unterrahmenteil (15), welches an einem Endabschnitt davon mit der Hauptrahmenbaugruppe (1) verbunden ist; und
ein zweites Unterrahmenteil (17), welches an einem Endabschnitt davon mit dem anderen Endabschnitt des ersten Unterrahmenteils (15) und am anderen Endabschnitt davon mit einem hinteren Abschnitt der Hauptrahmenbaugruppe (1) verbunden ist, und
wobei die links und rechts gepaarten Unterrahmen (4) mittels des Verstärkungselements (19) an einem Ort in der Umgebung eines Verbindungspunkts zwischen dem ersten Unterrahmenteil (15) und dem zweiten Unterrahmenteil (17) miteinander verbunden sind.

4. Kraftfahrzeug mit Sattel mit einer Rahmenstruktur nach einem der Ansprüche 1 bis 3, weiterhin umfassend eine seitliche Motorhaube (44), um einen vorderen Bereich des Verbrennungsmotors (E) von einer lateralen Seite abzudecken; wobei
das Verstärkungselement (19) einen seitlichen Motorhaubenstützabschnitt (76, 78) aufweist, um die seitliche Motorhaube (44) zu stützen.

5. Kraftfahrzeug mit Sattel mit einer Rahmenstruktur nach Anspruch 4, wobei die seitliche Motorhaube (44) durch einen Bolzen gestützt ist, welcher in den seitlichen Motorhaubenstützabschnitt (76, 78) von einer anteroposterioren Richtung eingesetzt ist.

## Revendications

1. Véhicule motorisé de type à enfourcher ayant une structure de cadre qui comprend:
un ensemble de cadre principal (1) pour supporter un moteur à combustion (E); et
une paire de sous-cadres gauche et droit (4) montée de manière amovible sur l'ensemble de cadre principal (1), chacun des sous-cadres gauche et droit (4) ayant des parties d'extrémité antéropostérieures supportées par l'ensemble de cadre principal (1), des parties intermédiaires respectives des sous-cadres gauche et droit (4) étant raccordées ensemble au moyen d'un élément de renforcement (19);
**caractérisé en ce que**:
les sous-cadres gauche et droit en paire (4) supportent le moteur à combustion (E) d'un côté des directions antéropostérieures du bloc-cylindres (26) du moteur à combustion (E) et sont raccordés ensemble au moyen de l'élément de renforcement (19) de l'autre côté des directions antéropostérieures du bloc-cylindres (26).

2. Véhicule motorisé de type à enfourcher ayant une structure de cadre selon la revendication 1, dans lequel l'élément de renforcement (19) est disposé au-dessus d'un tuyau d'échappement (32) devant le moteur à combustion (E) et les sous-cadres gauche et droit en paire (4) s'étendent sur un côté latéralement externe du moteur à combustion (E).

3. Véhicule motorisé de type à enfourcher ayant une structure de cadre selon la revendication 1 ou 2, dans lequel:
chacun des sous-cadres (4) comprend:
une première pièce de sous-cadre (15), qui est raccordée au niveau de l'une de ses parties d'extrémité, avec l'ensemble de cadre principal (1); et
une seconde pièce de sous-cadre (17) raccordée au niveau de l'une de ses parties d'extrémité avec l'autre partie d'extrémité de la première pièce de sous-cadre (15) et son autre partie d'extrémité avec une partie arrière de l'ensemble de cadre principal (1), et
les sous-cadres gauche et droit en paire (4) sont raccordés ensemble au moyen de l'élément de renforcement (19) à un emplacement à proximité d'un point de raccordement entre la première pièce de sous-cadre (15) et la seconde pièce de sous-cadre (17).

4. Véhicule motorisé de type à enfourcher ayant une structure de cadre selon l'une quelconque des revendications 1 à 3, comprenant en outre un élément d'habillage latéral (44) pour recouvrir une zone avant du moteur à combustion (E) depuis le côté latéral; dans lequel:
l'élément de renforcement (19) a une partie de support de l'élément d'habillage latéral (76, 78) pour supporter l'élément d'habillage latéral (44).

5. Véhicule motorisé de type à enfourcher ayant une structure de cadre selon la revendication 4, dans lequel l'élément d'habillage latéral (44) est supporté par un boulon qui est inséré dans la partie de support de l'élément d'habillage latéral (76, 78) à partir d'une direction antéropostérieure.
